# EUROPEAN PATENT APPLICATION

(11) **EP 4 481 112 A1**
(43) Date of publication of application: **25.12.2024**
(21) Application number: 23180238.0
(22) Date of filing: 20.06.2023
(51) Int. Cl.: D21H 27/10

(54) **ULTRASONIC SEALING OF PAPER OR PAPERBOARD**

(71) Applicant: Billerud Aktiebolag (publ), 169 27 Solna (SE)
(72) Inventor: NILSSON, Andreas, 952 51 Kalix (SE); LINDSTRÖM, Ove, 952 91 Kalix (SE)
(74) Representative: Kransell & Wennborg KB

(57) **Abstract**

The present disclosure provides a method of ultrasonic sealing of paper, wherein the method comprises the following steps:
a) providing a paper having an air permeance according to ISO 5636-5:2013 of 15 s or less;
b) wetting at least part of the paper with water; and
c) sealing a wetted portion of the paper from step b) to a paper surface by ultrasonic sealing.

## Description

### TECHNICAL FIELD

The present disclosure relates to the field of ultrasonic sealing of paper.

### BACKGROUND

There is a constant strive to reduce the usage of plastic materials in packaging. One route is to use paper-based packaging. To form a package from paper, a sealing needs to be formed between surfaces of paper.

Commonly at heat-sealing is used to join two surfaces of paper. However, to obtain a heat-seal, a heat-seal lacquer or coating comprising heat-sealable polymers is needed to apply on the surface, thus introducing plastics to the material.

One alternative technique to heat-sealing is ultrasonic sealing, also known as ultrasonic joining. An example of a device used for ultrasonic sealing of paper is described in US 9,399,330 B2 by Syntegon Technology GmbH.

However, not all papers are suitable for ultrasonic sealing.

### SUMMARY

The present inventors hypothesized that the result of the above-mentioned ultrasonic sealing process can be improved by careful selection of the properties of the paper. Hence an objective of the present disclosure is to identify paper properties that facilitate the ultrasonic sealing process.

Accordingly, the present disclosure provides the following listing of itemized embodiments:
1. A method of ultrasonic sealing of paper, wherein the method comprises the following steps:
   a) providing a paper having an air permeance according to ISO 5636-5:2013 of 15 s or less;
   b) wetting at least part of the paper with water; and
   c) sealing a wetted portion of the paper from step b) to a paper surface by ultrasonic sealing.
2. The method of item 1, wherein the paper is sealed to itself in step c).
3. The method of item 1, wherein the paper is sealed to a second paper in step c).
4. The method of any one of the preceding items, wherein the Bendtsen roughness measured according to ISO 8791-2:2013 of the part of the paper provided in step a) that is to be wetted and sealed is above 1000 ml/min, such as above 1200 ml/min.
5. The method of any one of the preceding items, wherein the density of the paper measured according to ISO 534:2011 is 600-900 kg/m³, such as 650-850 kg/m³.
6. The method of any one of the preceding items, wherein the Cobb 60s value measured according to ISO 535:2014 of the part of the paper provided in step a) that is to be wetted and sealed is 20-35 g/m², such as 25-34 g/m².
7. The method of any one of the preceding items, wherein the fibres of the paper are exclusively cellulose fibres.
8. The method of any one of the preceding items, wherein no plastic layer is provided on the part of the paper provided in step a) that is to be wetted and sealed.
9. The method of any one of the preceding items, wherein the paper is made from at least 70 wt% softwood fibres, such as at least 80 wt% softwood fibres.
10. The method of any one of the preceding items, wherein seal strength of the sealing measured according to ASTM F88 is at least 1.8 N, such as at least 2.0 N, on a 15 mm test strip measured at a constant rate of elongation of 100 mm/min.
11. The method of any one of the preceding items, wherein the grammage measured according to ISO 536:2020 of the paper is at least 70 g/m², such as 70-140 g/m².
12. The method of any one of the preceding items, wherein the air permeance according to ISO 5636-5:2013 of the paper is less than 15 s, such as less than 10 s.
13. Use of a paper in ultrasonic joining, wherein the paper has an air permeance according to ISO 5636-5:2013 of 15 s or less.
14. A method of forming a sealed package or container, wherein the method comprises the following steps:
   i. providing a paper having an air permeance according to ISO 5636-5:2013 of 15 s or less;
   ii. forming a package or container by folding the paper;
   iii. wetting at least part of the paper with water; and
   iv. sealing a wetted portion of the paper from step iii. to a paper surface by ultrasonic sealing.
15. A package or container comprising the sealed paper according to any one of the items 1-12.
16. Method of ultrasonic sealing a paper, wherein the method comprises the following steps:
   a. providing a paper, wherein the paper is coated with starch;
   b. wetting at least part of the starch-coated paper with water; and
   c. sealing a wetted portion of the paper from step b. to a paper surface by ultrasonic sealing.
17. The method of item 16, wherein the coat weight of the starch is 0.5-5 g/m², such as 0.5-3 g/m², such as 1-3 g/m².
18. The method of item 16 or 17, wherein the starch is a mixture of different types of starch, such as oxidized starch and dextrin.
19. The method of item 18, wherein oxidized starch is provided in an amount of 5-95 %, such as 10-50 %, such as 10-30 %, based on the dry weight of the of the mixture and dextrin, such as maltodextrin, is provided in an amount of 95-5 %, such as 90-50 %, such as 90-70 %, based on the dry weight of the mixture.
20. The method of any one of the items 16-19, wherein the paper is sealed to itself in step c).
21. The method of any one of the items 16-19, wherein the paper is sealed to a second paper in step c).
22. The method of any one of the items 16-21, wherein the Bendtsen roughness measured according to ISO 8791-2:2013 of the part of the paper provided in step a) that is to be wetted and sealed is above 1000 ml/min, such as above 1200 ml/min.
23. The method of any one of the items 16-22, wherein the density of the paper measured according to ISO 534:2011 is 600-900 kg/m³, such as 650-850 kg/m³.
24. The method of any one of the items 16-23, wherein the Cobb 60s value measured according to ISO 535:2014 of the part of the paper provided in step a) that is to be wetted and sealed is 15-35 g/m², such as 17-30 g/m².
25. The method of any one of the preceding items, wherein the fibres of the paper are exclusively cellulose fibres.
26. The method of any one of the preceding items, wherein no plastic layer is provided on the part of the part of the paper provided in step a) that is to be wetted and sealed.
27. The method of any one of the preceding items, wherein the paper is made from at least 50 wt% softwood fibres, such as at least 60 wt% softwood fibres.
28. The method of any one of the preceding items, wherein seal strength of the sealing measured according to ASTM F88 is at least 2.0 N, such as at least 2.5 N, on a 15 mm test strip measured at a constant rate of elongation of 100 mm/min.
29. The method of any one of the preceding items, wherein the grammage measured according to ISO 536:2020 of the paper is 50-90 g/m², such as 55-85 g/m².
30. Use of a paper in ultrasonic sealing, wherein the paper is coated with starch.
31. A method of forming a sealed package or container, wherein the method comprises the following steps:
   i. providing a paper coated with starch;
   ii. forming a package or container by folding the paper;
   iii. wetting at least part of the paper with water; and
   iv. sealing a wetted portion of the paper from step iii. to a paper surface by ultrasonic sealing.
32. A package or container comprising the sealed paper according to any one of the items 16-29.

Regarding the items 1-15, the inventors have identified air permeability as a key parameter being linked to how strong seal can be formed in ultrasonic sealing. It has been realized that papers having an air permeance of 15 s or below are particularly suitable for ultrasonic sealing and create a strong seal without the use of any plastics.

Regarding the items 16-32, the inventors have also identified that a starch coating can be used to create a strong seal in ultrasonic sealing.

### BRIEF DESCRIPTION OF THE DRAWINGS

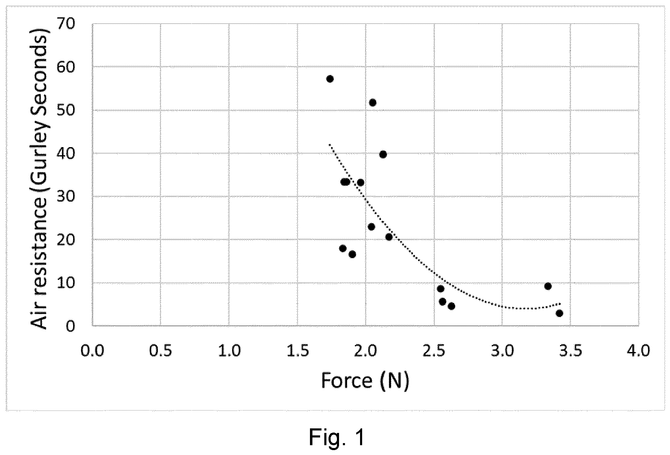

Fig 1 shows data from measurements on various papers. On the Y-axis is the air permeance in Gurley seconds measured according to ISO 5636-5:2013. On the X-axis is the seal strength in N of papers joined by ultrasonic sealing. The dotted line is a polynomial trendline of the second order for visual guidance.

### DETAILED DESCRIPTION

As a first aspect of the present disclosure there is provided a method of sealing a paper by ultrasonic sealing, wherein the method comprises the following steps:
a) providing a paper having an air permeance according to ISO 5636-5:2013 of 15 s or less;
b) wetting at least part of the paper with water; and
c) sealing a wetted portion of the paper from step b) to a paper surface by ultrasonic sealing.

Ultrasonic sealing is the same as ultrasonic joining as well as ultrasonic welding. A suitable device as well as the technique itself is described in detail in US 9,399,330 B2 by Syntegon Technology GmbH. The paper is introduced in a gap between a sonotrode and an anvil and by causing the sonotrode to oscillate ultrasonically the paper is ultrasonically sealed.

Preferably, the paper surface of step c) is also wetted.

The portion of the paper to be sealed is wetted with water to moisturize the surface of the paper. The water is needed to form a strong seal in the ultrasonic sealing. Without being bound to any theory it is believed that the water penetrates the surface of the paper and softens the fibres so that they can re-form when the ultrasonic sealing is conducted. For the avoidance of doubt, the wetted part may be greater that the portion that is subsequently sealed. In one embodiment, essentially all of a side of the paper is wetted in step b), whereas only a minor portion of that wetted side is sealed in step c).

The inventors have identified air permeability according to ISO 5636-5:2013 as a key parameter being linked to formation of strong seals in ultrasonic sealing. It has been realized that papers having an air permeance of 15 s or less are particularly suitable for ultrasonic sealing and create a strong seal without the use of any plastics. This is further shown in the Examples section below and illustrated in Fig 1. The air permeability is also referred to as Gurley or Gurley seconds. Fig 1 shows a test series of various papers. On the Y-axis is the air permeance according to ISO 5636-5:2013 in Gurley seconds. On the X-axis is the seal strength in N of papers joined by ultrasonic joining. The dotted line is a polynomial trendline of the second order for visual guidance. The seal force is about the same for papers having a Gurley value above 15 s. Below 15 s the seal force increases substantially. The air permeance according to ISO 5636-5:2013 (i.e. the "Gurley value") of the paper may be 10 s or less. A suitable lower limit for the air permeability is 3 s. That is, the air permeance may be 15 s or less and 3 s or more, such as 10 s or less and 3 s or more.

Typically, the paper is not calendered to keep the permeance higher, i.e. the Gurley value lower. On the other hand, as long as the permeability is sufficiently high, the paper may also have been calendered.

There is no limitation in type of paper. The paper can be made from fibres being bleached or unbleached. The paper can be made from softwood fibres and/or hardwood fibres and/or other cellulosic fibres. Additives typically used in the furnishes in papermaking have typically been added to the furnishes, such as sizing agents, strengths agents, pigments and pH regulators.

Preferably, the fibres of the paper are exclusively cellulose fibres. If synthetic fibres, such as polyester fibres, are used to form part of the paper, the environmental impact of the paper is increased which is a disadvantage. Also the repulpability as well as recyclability are impaired. Similarly, no plastic layer is typically provided on the portion of the paper to be wetted and sealed. Since a plastic layer also is typically airtight, provision of a plastic layer would not only lead to an increased environmental impact, but also to a significantly lower air permeance in most cases. Typically, the paper is made from at least 70 wt% softwood fibres, such as at least 80 wt% softwood fibres. Softwood fibres are stronger than other cellulose fibres, which is beneficial for creating a strong seal.

Typically, the Cobb 60s value measured according to ISO 535:2014 of at least the part of the paper that is to be wetted and sealed is 20-35 g/m², such as 25-34 g/m². If the Cobb 60s value is too low, the ability of absorbing water in the part to be sealed may be too low to create a strong seal. On the other hand, if the Cobbs 6os value is too high, the paper typically absorbs too much water, and the structural integrity is impaired.

The paper may be sealed to itself in step c). In such case, a package or container can be produced from a single paper by folding or rolling the paper followed by ultrasonic sealing. Alternatively, the paper is sealed to a second paper in step c). In such case, a package or container can be produced without the need for folding any of the papers. Moreover, production of a package being of different shapes on top and bottom side is facilitated.

Typically, the Bendtsen roughness measured according to ISO 8791-2:2013 of at least the part of the paper to be wetted and sealed is above 1000 ml/min, such as above 1200 ml/min. The inventors have realized that such roughness is beneficial for the formation of a strong seal.

The density of the paper measured according to ISO 534:2011 may be 600-900 kg/m³, such as 650-850 kg/m³. Such density is beneficial for creating a strong seal.

The seal strength of the sealing is typically at least 1.8 N, such as at least 2.0 N measured according to ASTM F88 on a 15 mm test strip. The seal strength is the tensile strength produced in the joining point in N using a constant rate of elongation of 100 mm/min.

Typically, the grammage measured according to ISO 536:2020 of the paper is at least 70 g/m², such as 70-140 g/m².

As a second aspect of the present disclosure there is provided use of a paper in ultrasonic joining, wherein the paper has an air permeance according to ISO 5636-5:2013 of 15 s or less.

The examples and embodiments discussed above in connection to the first aspect apply to the second aspect *mutatis mutandis.*

As a third aspect of the present disclosure there is provided a method of forming a sealed package or container, wherein the method comprises the following steps:
i. providing a paper having an air permeance according to ISO 5636-5:2013 of 15 s or less;
ii. forming a package or container by folding the paper;
iii. wetting at least part of the paper with water; and
iv. sealing a wetted portion of the paper from step iii. to a paper surface by ultrasonic sealing.

The package or container may comprise a sealing and a product within the package or container, wherein the sealing is arranged so that a product is sealed within the package or container. In such embodiment, the product is enclosed inside the sealed package independently on which direction the package is arranged in. Example of such package is a closed sealed pouch sealed all around the product. Alternatively, the package or container is folded around the product and the open edges being sealed. In yet another alternative, the paper is sealed and thereafter folded followed by provision of the product to be contained therein and final sealing of the package or container.

An example of a package is a tube. In such case, a paper having an an air permeance according to ISO 5636-5:2013 of 15 s or less is provided and rolled and wetted. Thereafter the roll is sealed longitudinally and a tube lid portion is provided in one of the open ends leaving only one end open. In a following step the product is inserted into the package through the open end, which is subsequently sealed by wetting and ultrasonic sealing and thereby forming a tube.

Another example of a package is a flow-wrapped product. In such case a paper having an an air permeance according to ISO 5636-5:2013 of 15 s or less is provided and the paper is formed by folding the paper over a product. Subsequently, two end seals are formed in the ends and one fin-seal is formed longitudinally by wetting followed by ultrasonic sealing so that a flow-wrapped product is provided.

Yet another example of a package is a folded paper box. In such case a paper blank is provided and the blank is formed by folding into a box. Subsequently, the box is sealed by wetting followed by ultrasonic sealing. Alternatively, the blank is wetted prior to folding into a box and thereafter sealed directly.

Depending on the type of package or container to be formed, steps ii. and iii. can be conducted in the order of forming a package or container followed by wetting, i.e. step ii. prior to step iii. Alternatively, the wetting can be conducted first followed by folding, i.e. step iii. prior to step ii.

In an alternative embodiment, the package or container comprises a sealing arranged so that the package or container is partly open so that a product can be inserted and removed without breaking the sealing or the package or container. Example of such package is a bag sealed on all sides but one leaving an opening, or a folded paper sealed on one edge leaving an opening. In such embodiment, the paper is wetted

The examples and embodiments discussed above in connection to the first and second aspect apply to the third aspect *mutatis mutandis.*

As a fourth aspect of the present disclosure there is provided a package or container comprising the sealed paper according to the first aspect of the present disclosure.

Typically, such package or container does not contain any plastic layer so that the whole package or container consists of paper. Thereby, the environmental impact is significantly lower than plastic-coated packages or containers and recycling is facilitated.

The examples and embodiments discussed above in connection to the first, second and third aspects apply to the fourth aspect *mutatis mutandis.*

As a fifth aspect of the present disclosure there is provided a method of ultrasonic sealing a paper, wherein the method comprises the following steps:
a. providing a paper wherein the paper is coated with starch;
b. wetting at least part of the starch-coated paper with water; and
c. sealing a wetted portion of the paper from step b. to a paper by ultrasonic sealing.

The coat weight of the starch is typically 0.5-5 g/m², such as 0.5-3 g/m², such as 1-3 g/m². The starch may be a mixture of different types of starch, such as oxidized starch and dextrin. In such case, it is preferred that oxidized starch is provided in an amount of 5-95 %, such as 10-50 %, such as 10-30 %, based on the dry weight of the of the mixture and dextrin, such as maltodextrin, is provided in an amount of 95-5 %, such as 90-50 %, such as 90-70 %, based on the dry weight of the mixture. The starch may also be only one type of starch.

Ultrasonic sealing is the same as ultrasonic joining as well as ultrasonic welding. A suitable device as well as the technique is described in detail in US 9,399,330 B2 by Syntegon Technology GmbH. The paper is introduced in a gap between a sonotrode and an anvil and by causing the sonotrode to oscillate ultrasonically the paper is ultrasonically joined.

At least the part of the paper to be sealed is wetted with water to moisturize the surface of the paper. The water is needed to form a strong seal in the ultrasonic sealing. Without being bound to any theory it is believed that the water penetrates the surface of the paper and softens the fibres so that they can be reformed when the ultrasonic sealing is conducted. For the avoidance of doubt, more than the part of the surface of the paper to be sealed may be wetted, such as the whole surface of the paper.

There is no limitation in type of paper. The paper can be made from fibres being bleached or unbleached. The paper can be made from softwood fibres and/or hardwood fibres and/or other cellulosic fibres. Additives typically used in the furnishes in papermaking have typically been added to the furnishes, such as sizing agents, strengths agents, pigments and pH regulators. The paper can be calendered or non-calendered.

Preferably, the fibres of the paper are exclusively cellulose fibres. If synthetic fibres, such as polyester fibres, are used to form part of the paper, the environmental impact of the paper is increased which is a disadvantage. Also the repulpability as well as recyclability are impaired. Similarly, no plastic layer is typically provided on the part of the paper to be wetted and sealed. Typically, the paper is made from at least 50 wt% softwood fibres, such as at least 60 wt% softwood fibres. Softwood fibres are stronger than other cellulose fibres, which is beneficial for creating a strong seal.

Typically, the Cobb 60s value measured according to ISO 535:2014 of at least the part of the paper to be wetted and sealed is 15-35 g/m², such as 17-30 g/m². If the Cobb 60s value is too low, the ability of absorbing water in the part to be sealed may be too low to create a strong seal. On the other hand, if the Cobbs 6os value is too high, the paper typically absorbs too much water, and the structural integrity is impaired.

The paper may be sealed to itself in step c). In such case, a package or container can be produced from a single paper by folding or rolling the paper followed by ultrasonic sealing. Alternatively, the paper is sealed to a second paper in step c. In such case, a package or container can be produced without the need for folding any of the papers. Moreover, production of a package being of different shapes on top and bottom side is facilitated.

Typically, the Bendtsen roughness measured according to ISO 8791-2:2013 of at least the part of the paper to be wetted and sealed is above 1000 ml/min, such as above 1200 ml/min. The inventors have realized that such roughness is beneficial for the formation of a strong seal.

The density of the paper measured according to ISO 534:2011 may be 600-900 kg/m³, such as 650-850 kg/m³. Such density is beneficial for creating a strong seal.

The seal strength of the sealing is typically at least 2.0 N, such as at least 2.5 N measured according to ASTM F88 is on a 15 mm test strip measured at a constant rate of elongation of 100 mm/min. The seal strength is the tensile strength produced in the joining point in N using a constant rate of elongation of 100 mm/min.

Typically, the grammage measured according to ISO 536:2020 of the paper is typically 50-90 g/m², such as 55-85 g/m².

As a sixth aspect of the present disclosure there is provided use of a paper in ultrasonic sealing, wherein the paper is coated with starch.

The examples and embodiments discussed above in connection to the fifth aspect apply to the sixth aspect *mutatis mutandis.*

As a seventh aspect of the present disclosure there is provided a method of forming a sealed package or container, wherein the method comprises the following steps:
i. providing a paper coated with starch;
ii. forming a package or container by folding the paper;
iii. wetting at least part of the paper with water; and
iv. sealing a wetted portion of the paper from step iii. to a paper surface by ultrasonic sealing.

The package or container may comprise a sealing and a product within the package or container, wherein the sealing is arranged so that a product is sealed within the package or container. In such embodiment, the product is enclosed inside the sealed package independently on which direction the package is arranged in. Example of such package is a closed sealed pouch sealed all around the product. Alternatively, the package or container is folded around the product and the open edges being sealed. In yet another alternative, the paper is sealed and thereafter folded followed by provision of the product to be contained therein and final sealing of the package or container.

An example of a package is a tube. In such case, a paper having an an air permeance according to ISO 5636-5:2013 of 15 s or less is provided and rolled and wetted. Thereafter the roll is sealed longitudinally and a tube lid portion is provided in one of the open ends leaving only one end open. In a following step the product is inserted into the package through the open end, which is subsequently sealed by wetting and ultrasonic sealing and thereby forming a tube.

Another example of a package is a flow-wrapped product. In such case a paper having an an air permeance according to ISO 5636-5:2013 of 15 s or less is provided and the paper is formed by folding the paper over a product. Subsequently, two end seals are formed in the ends and one fin-seal is formed longitudinally by wetting followed by ultrasonic sealing so that a flow-wrapped product is provided.

Yet another example of a package is a folded paper box. In such case a paper blank is provided and the blank is formed by folding into a box. Subsequently, the box is sealed by wetting followed by ultrasonic sealing. Alternatively, the blank is wetted prior to folding into a box and thereafter sealed directly.

Depending on the type of package or container to be formed, steps ii. and iii. can be conducted in the order of forming a package or container followed by wetting, i.e. step ii. prior to step iii. Alternatively, the wetting can be conducted first followed by folding, i.e. step iii. prior to step ii.

In an alternative embodiment, the package or container comprises a sealing arranged so that the package or container is partly open so that a product can be inserted and removed without breaking the sealing or the package or container. Example of such package is a bag sealed on all sides but one leaving an opening, or a folded paper sealed on one edge leaving an opening.

The examples and embodiments discussed above in connection to the fifth, and sixth aspects apply to the seventh aspect *mutatis mutandis.*

As an eighth aspect of the present disclosure there is provided a package or container comprising the sealed paper according to the fifth aspect of the present disclosure.

Typically, such package or container does not contain any plastic layer so that the whole package or container consists of paper. Thereby, the environmental impact is significantly lower than plastic-coated packages or containers and recycling is facilitated.

The examples and embodiments discussed above in connection to the fifth, sixth and seventh aspects apply to the eighth aspect *mutatis mutandis*

### EXAMPLE

Various papers, both bleached (Kappa 1) and unbleached (Kappa 27 or Kappa 50), having various contents of softwood (SW) fibres were evaluated. The papers having less than 100% SW fibre content also contained hardwood (HW) fibres as the rest of the fibres. No synthetic fibres were used in the papers. Without coating the paper with any plastic layer, the paper was wetted with water (8 µl) on an area of 5x15 mm and sealed using ultrasonic joining by the device described in US 9,399,330 B2 at a pressure of 2-5 bar for a joining time of 150-600 msec.

Moreover, the fibre tear was evaluated. Fibre tear is a measure of how strong the seal is. If no fibre tear is obtained, the seal has failed within the seal itself leaving the papers intact, a so-called adhesive failure. On the other hand, if the seal is stronger than the paper, the rupture will occur within the paper in a so-called cohesive failure. In the latter case fibres are visibly torn out, which is referred to as fibre tear. Hence, the stronger the seal, the more fibre tear is shown.

All evaluated properties are listed together with corresponding test method in table 1 below.

**Table 1. Properties evaluated and test methods used.**

| **Property** | **Test method** |
|---|---|
| Seal strength (N) | ASTM F88 on 15 mm test strips |
| Fibre tear (%) | Visual inspection |
| Air permeance - Gurley (s) | ISO 5636-5:2013 |
| Bendtsen roughness (ml/min) | ISO 8791-2:2013 |
| Grammage | ISO 536:2020 |
| Density (kg/m³) | ISO 534:2011 |
| Cobb 60 s | ISO 535:2014 |
| Kappa number | ISO 302:2015 |

The properties of the papers are as well as the seal force and fibre tear presented in table 2 below.

**Table 2. Properties and seal force as well as fibre tear of tested papers.**

| **Sample** | **Force (N)** | **Fibre Tear** | **Air resist. (S)** | **Rough -ness (ml/ min)** | **Gram. (g/m²)** | **Dens. (kg/ m3)** | **Cobb (g/m²)** | **SW fibre content (%)** |
|---|---|---|---|---|---|---|---|---|
| **Paper** | | | | | | | | |
| QuickFill Plus (Kappa 50) | 3.4 | 94% | 3 | 1321 | 80 | 689 | 27 | 100 |
| QuickFill Single (Kappa 50) | 3.3 | 86% | 9.2 | 3557 | 120 | 702 | 29 | 100 |
| QuickFill SE (Kappa 50) | 2.6 | 74% | 4.7 | 1471 | 80 | 695 | 29 | 100 |
| QuickFill SE (Kappa 1) | 2.6 | 94% | 5.6 | 1484 | 80 | 665 | 29 | 100 |
| Performance SE (Kappa 50) | 2.5 | 82% | 8.6 | 1481 | 80 | 674 | 31 | 100 |
| Brown (Kappa 27) Xpression E-com | 2.2 | 62% | 20.6 | 841 | 80 | 688 | 24 | 100 |
| White (Kappa 1) Axello Kraft | 2.1 | 82% | 39.8 | 326 | 80 | 844 | 23 | 100 |
| White (Kappa 1) Axello Swan HS | 2.1 | 82% | 51.7 | 446 | 80 | 834 | 20 | 75 |
| White (Kappa 1) Xpression E-com | 2 | 80% | 23 | 341 | 80 | 822 | 22 | 100 |
| Brown (Kappa 27) Xpression E-com Cal | 2 | 70% | 33.2 | 247 | 80 | 871 | 24 | 100 |
| Performance SE (Kappa 1) | 1.9 | 88% | 16.6 | 1123 | 80 | 716 | 28 | 100 |
| Axello Glaze (Kappa 1) | 1.9 | 84% | 33.4 | 715 | 80 | 794 | 24 | 60 |
| Xpression E-com (Kappa 50) | 1.8 | 76% | 18 | 1356 | 80 | 699 | 32 | 100 |
| Axello Glaze MG side (Kappa 1) | 1.8 | 100% | 33.4 | 98 | 80 | 794 | 24 | 60 |
| White (Kappa 1) Axello Swan | 1.7 | 68% | 57.3 | 327 | 80 | 847 | 26 | 75 |
| | | | | | | | | |

| **Starch-coated paper** | | | | | | | | |
|---|---|---|---|---|---|---|---|---|
| Repel Pure | 2.9 | 100% | 253 | 23 | 45 | | 18 | 60 |

As seen from the data, a particularly strong seal as well as high fibre tear is obtained when the air permeance is higher, i.e. when the Gurley value (measured in seconds (S)) is lower.

Herein, it is also referred to figure 1, in which air permeance is plotted against seal force for the papers in the table above. In figure 1 it is shown that the seal force is constantly at a low level when the Gurley value is above 15 s. The papers having a Gurley value of 15 s or less form significantly stronger seals.

The starch-coated paper "Repel Pure" is a paper coated by the use of a film press with a coating consisting of Perfectafilm B4085 from Avebe (100 pph) and Kymene GHP20 from Solenis (5 pph) being a wet strength agent. Perfectafilm B4085 is a mixture of oxidized starch (20 wt%) and maltodextrin (80 wt%). The coat weight was about 2 g/m². The seal force of the starch-coated paper is significantly higher than the papers having high Gurley values.

## Claims

1. A method of ultrasonic sealing of paper, wherein the method comprises the following steps:
a) providing a paper having an air permeance according to ISO 5636-5:2013 of 15 s or less;
b) wetting at least part of the paper with water; and
c) sealing a wetted portion of the paper from step b) to a paper surface by ultrasonic sealing.

2. The method of claim 1, wherein the paper is sealed to itself in step c).

3. The method of claim 1, wherein the paper is sealed to a second paper in step c).

4. The method of any one of the preceding claims, wherein the Bendtsen roughness measured according to ISO 8791-2:2013 of the part of the paper provided in step a) that is to be wetted and sealed is above 1000 ml/min, such as above 1200 ml/min.

5. The method of any one of the preceding claims, wherein the density of the paper measured according to ISO 534:2011 is 600-900 kg/m³, such as 650-850 kg/m³.

6. The method of any one of the preceding claims, wherein the Cobb 60s value measured according to ISO 535:2014 of the part of the paper provided in step a) that is to be wetted and sealed is 20-35 g/m², such as 25-34 g/m².

7. The method of any one of the preceding claims, wherein the fibres of the paper are exclusively cellulose fibres.

8. The method of any one of the preceding claims, wherein no plastic layer is provided on the part of the paper provided in step a) that is to be wetted and sealed.

9. The method of any one of the preceding claims, wherein the paper is made from at least 70 wt% softwood fibres, such as at least 80 wt% softwood fibres.

10. The method of any one of the preceding claims, wherein seal strength of the sealing measured according to ASTM F88 is at least 1.8 N, such as at least 2.0 N, on a 15 mm test strip measured at a constant rate of elongation of 100 mm/min.

11. The method of any one of the preceding claims, wherein the grammage measured according to ISO 536:2020 of the paper is at least 70 g/m², such as 70-140 g/m.

12. The method of any one of the preceding claims, wherein the air permeance according to ISO 5636-5:2013 of the paper is 10 s or less.

13. Use of a paper in ultrasonic sealing, wherein the paper has an air permeance according to ISO 5636-5:2013 of 15 s or less.

14. A method of forming a sealed package or container, wherein the method comprises the following steps:
i. providing a paper having an air permeance according to ISO 5636-5:2013 of 15 s or less;
ii. forming a package or container by folding the paper;
iii. wetting part of the paper with water; and
iv. sealing the wetted part to a paper surface by ultrasonic sealing.

15. A package or container comprising the sealed paper according to any one of the claims 1-12.
